# EUROPÄISCHE PATENTSCHRIFT

(11) **EP 2 093 877 B1**
(45) Veröffentlichungstag und Bekanntmachung des Hinweises auf die Patenterteilung: **23.11.2011**
(21) Anmeldenummer: 09100055.4
(22) Anmeldetag: 21.01.2009
(51) Int. Cl.: H02P 6/16, G01D 5/20, G01D 5/244, G05B 17/02

(54) **Verfahren zum Betrieb eines Stellantriebs und Stellantrieb**
Method for operating an actuating drive and actuating drive
Procédé destiné au fonctionnement d'un mécanisme de commande et mécanisme de commande

(30) Priorität: 25.02.2008 DE 102008010964
(43) Veröffentlichungstag der Anmeldung: 26.08.2009
(73) Patentinhaber: Continental Automotive GmbH, 30165 Hannover (DE)
(72) Erfinder: Wallrafen, Werner, 65719, Hofheim (DE)

(56) Entgegenhaltungen:
- DE-A1- 10 316 436
- US-A1- 2004 135 534
- US-A1- 2005 132 802

## Beschreibung

Die Erfindung bezieht sich auf ein Verfahren zum Betrieb eines Stellantriebs mit einem elektrisch kommutierten Motor zur Verstellung eines Stellorgans, mit einem Stellungsgeber zur Erfassung der Drehwinkelposition des Rotors des Motors oder eines von diesem drehbar antreibbaren Elements, mit einer Motorsteuerungseinheit zur Kommutierung des Motors und Lageregelung des Stellorgans, wobei der Motorsteuerungseinheit Positionssignale zuführbar sind, die den vom Stellungsgeber erfassten Positionswerten entsprechen.

Bei einem derartigen Verfahren ist es bekannt, dass der Stellungsgeber am Ausgang des Stellantriebs für die Lageregelung Informationen für die Kommutierung ableitet. Die Bestromungsmuster müssen durch Fertigungstoleranzen bedingt allerdings exemplarisch ermittelt und individuell in der Ansteuerelektronik nichtflüchtig abgespeichert werden. Spiel im Getriebe, welches sich während der Betriebszeit noch verändert, führt zu nicht vorhersagbaren Phasenfehlern und zu schlechten Kommmutierungsergebnissen.

Zusätzlich kann auch der Stellungsgeber seine Signale mit der Betriebszeit und höheren Temperaturen verändern, die mit einer einmaligen exemplarischen Ermittlung nicht berücksichtigt werden. Die Korrektur von Winkelfehlern bei Stellungsgebern ist Gegenstand, unter anderem, der Dokumente DE 103 16436, US 2005/0132802 und US 2004/0135534. Die Verwendung von hochpräzisen und stabilen Stellungsgebern ist aufwendig und kostenintensiv.

Aufgabe der Erfindung ist es daher ein Verfahren und einen Stellantrieb der eingangs genannten Art zu schaffen, durch das bzw. den bei einfachem Aufbau der Kommutierungs- und Lageregelungseinrichtung eine phasengenaue Kommutierung des elektrisch kommutierten Motors erreicht wird.

Diese Aufgabe wird erfindungsgemäß nach Anspruch 1 dadurch gelöst, dass nach Inbetriebnahme des Stellantriebs über mindestens eine volle Umdrehung des Rotors oder des drehbar antreibbaren Elements von dem Stellungsgeber unkompensierte Messwerte erfasst werden, wobei in einer Signalverarbeitungseinheit die Signale eines Sensors in Sinusspannungssignale und Cosinusspannungssignal verarbeitet werden und in der Motorsteuerungseinheit durch einen A/D-Wandler in digitale Sinus-Winkelsignale und Cosinus-Winkelsignale umgewandelt werden und in einer Kompensationseinheit entsprechende Korrekturwerte zur Kompensation von Winkelfehlern gebildet werden, indem die Extremwerte der Sinus-Winkelsignale und Cosinus-Winkelsignale in der Kompensationseinheit ermittelt werden und daraus Offsetkorrekturwerte und Amplitudenkorrekturwerte berechnet werden, sowie entsprechend trigonometrischen Berechnungen kompensierte Winkelsignale gebildet werden und die Korrekturwerte einer Speichereinheit zur Speicherung zugeleitet werden, und dass die im weiteren Betrieb erfassten Positionswerte mit den Korrekturwerten fehlerkompensiert und einer Kommutierungseinheit und/oder einer Lageregelungseinheit der Motorsteuerungseinheit zugeleitet werden.

Nach Inbetriebnahme bedeutet entweder unmittelbar nach elektrischem Einschalten des Stellantriebs oder im laufenden Betrieb unter vorherbestimmten Betriebsbedingungen.

Dieses Verfahren führt zu einer phasengenauen Kommutierung des Motors mit einem hohen Wirkungsgrad, verbessertem Rundlauf und guter dynamischer Lageregelung. Ein exemplarischer Abgleich von Fertigungstoleranzen wird nicht benötigt, da das Verfahren bei jedem Einschaltvorgang sich selbst kalibrieren kann und darüber hinaus auch mit zunehmender Lebensdauer hinzukommender Verschleiß sowie Temperaturabhängigkeiten immer wieder kompensiert werden.

Darüber hinaus kann ein sehr ungenauer, kleiner und damit preiswerter Positionssensor verwendet werden.

Ein vorteilhafter Verfahrensablauf besteht darin, dass die Positionswerte als Sinus-Winkelsignale und Cosinus-Winkelsignale aufbereitet und der Kompensationseinheit zugeführt werden, wobei in der Kompensationseinheit die Extremwerte der Sinus-Winkelsignale und der Cosinus-Winkelsignale ermittelt werden und daraus Offsetkorrekturwerte und Amplitudenkorrekturwerte berechnet werden und diese der Kommutierungseinheit und/oder der Lageregelungseinheit der Motorsteuerungseinheit zugeleitet werden.

Zusätzlich kann durch die Kompensationseinheit die Winkelabweichung zwischen einer Nullposition des Rotors des Motors oder des drehbar antreibbaren Elements und einer Nullposition des Stellungsgebers ermittelt und der Kommutierungseinheit und/oder der Lageregelungseinheit zugeleitet werden.

Die Nullposition des Rotors oder des drehbar antreibbaren Elements kann eine vorherbestimmte angesteuerte elektrisch erzwungene Position des Motors (Sattelpunkt) und die Nullposition des Stellungsgebers durch die Einbaulage bestimmt sein. Dabei können auch mehrere Sattelpunkte erfasst werden, wobei vorzugsweise im Schrittmotorbetrieb jeder Sattelpunkt angefahren wird.

Nach einer vollen Umdrehung kann ein Mittelwert aller Winkelabweichungen zwischen den Sattelpunkten durch die elektrisch erzwungenen Phasen des Rotors oder des drehbar antreibbaren Elements und der an diesen Positionen gemessenen Winkelwerte des Stellungsgebers gebildet und der Kommutierungseinheit zur Nullpunkt-Korrektur zur Kommutierung zugeleitet werden.

Durch diese Verfahren werden hochgenaue Winkelinformationen zur Kommutierung und Lageregelung zur Verfügung gestellt, so dass der Wirkungsgrad des Motors und die Regelgenauigkeit erhöht wird.

Nach einer Kompensation der Stellungsgebersignale zur Kommutierung des Motors kann ein Hebelanschluss oder das Stellorgan durch den Motor in eine Referenzlage gefahren werden und die dort erfasste Drehwinkelposition als Referenzposition der Speichereinheit zur Indizierung für die Lageregelung der Lageregelungseinheit zugeleitet werden.

Dabei kann die Referenzlage durch einen mechanischen Anschlag definiert sein, in die der Hebelanschluss oder das Stellorgan gefahren wird.

Eine Initialisierungsphase kann nach elektrischem Einschalten und vorzugsweise nach vollständiger Kompensation des Stellungsgebers erfolgen.

Eine noch größere Genauigkeit über die Lebensdauer erfolgt dadurch, dass zusätzliche Kompensierungen in vorbestimmten Betriebszuständen während des Betriebs abhängig von einer oder mehreren erfassten physikalischen Größen erfolgt, wobei die physikalische Größe eine oder mehrere bestimmte Temperaturen insbesondere Betriebstemperaturen des Stellantriebs sein können.

Bei einem Stellantrieb nach Anspruch 12 zur Durchführung des Verfahrens kann die Speichereinheit eine flüchtige Speichereinheit oder eine nichtflüchtige Speichereinheit sein.

Grundsätzlich kann jede Art von Stellungsgeber auf magnetischer, induktiver oder kapazitiver Basis zur Anwendung kommen.

Kostengünstig ist es aber, wenn der Stellungsgeber einen magnetoresistiven Winkelsensor, einen Hallsensor oder einen induktiven Sensor aufweist, durch den das Magnetfeld des oder der Rotormagnete des Motors oder eines auf der Motorwelle oder dem von dem Motor antreibbaren Element angeordneten Magneten erfassbar ist.

Das von dem Motor drehbar antreibbare Element kann ein Zwischenrad zwischen der Motorwelle und dem Stellorgan sein.

Vorzugsweise ist das Stellorgan ein Stellorgan eines Kraftfahrzeuges, wobei durch Stellorgan die Schaufelgeometrie eines Turboladers, oder Ladungsbewegungsklappen oder ein variabel verstellbarer Ventiltrieb verstellbar sein kann. Die Verbindung zwischen dem Stellorgan und dem Stellantrieb kann über einen Hebelanschluss erfolgen.

Weitere Möglichkeiten bestehen darin, dass durch das Stellorgan eine Getriebeschaltung oder eine Drosselklappe oder eine Abgasregelklappe oder ein Abgas- Bypassventil verstellbar sind.

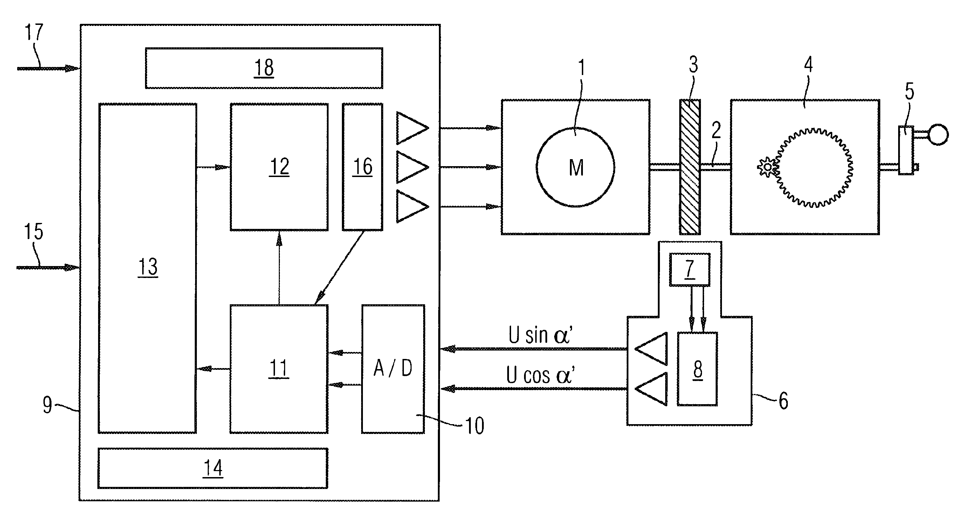

Ein Ausführungsbeispiel der Erfindung ist in der Zeichnung dargestellt und wird im Folgenden näher beschrieben. Die einzige Figur der Zeichnung zeigt eine Prinzipdarstellung eines Stellantriebs zur Durchführung eines Verfahrens zum Betrieb des Stellantriebs.

Der dargestellte Stellantrieb zeigt einen elektrisch kommutierten Motor 1, dessen Motorwelle 2 einen radial magnetisierten Dauermagneten 3 trägt.

Durch die Motorwelle 2 ist über ein Getriebe 4 ein Hebelanschluss 5 für ein nicht dargestelltes verstellbares Stellorgan verstellbar.

Radial zum Dauermagneten 3 ist ein Stellungsgeber 6 angeordnet, der einen von dem Magnetfeld des Dauermagneten 3 beeinflussbaren Sensor 7 und eine Signalverarbeitungseinheit 8 aufweist.

Durch die Signalverarbeitungseinheit 8 werden die Signale des Sensors 7 in Sinusspannungssignale Usinα' und Cosinusspannungssignal Ucosα' verarbeitet, die einer Motorsteuerungseinheit 9 zugeführt und dort durch einen A/D-Wandler 10 in digitale Sinus-Winkelsignale und Cosinus-Winkelsignale umgewandelt werden.

Aus diesen Sinus-Winkelsignalen und Cosinus-Winkelsignalen werden dann in einer Kompensationseinheit 11 deren Extremwerte ermittelt und daraus Offsetkorrekturwerte und Amplitudenkorrekturwerte berechnet, sowie entsprechend trigonometrischen Berechnungen kompensierte Winkelsignale gebildet, die einer Kommutierungseinheit 12 sowie einer Lageregelungseinheit 13 zugeführt und in einer Speichereinheit 14 gespeichert werden.

Zur Lageregelung entsprechend einem Eingabesteuerungssignal 15 wird von der Lageregelungseinheit 13 der Kommutierungseinheit 12 ein entsprechendes kompensiertes Winkelsignal zugeführt und von der Kommutierungseinheit 12 über eine Treiberstufe 16 der Motor 1 angesteuert.

Weiterhin wird das Ansteuersignal der Treiberstufe 16 auch für einen Lernprozess für die elektrisch erzwungenen Sattelpunkt-Phasen zur Nullpunktkorrektur der Kompensationseinheit 11 zugeleitet.

Über einen Energieanschluss 17 wird einer Spannungsversorgungseinheit 18 eine Spannung zur Versorgung der Komponenten der Motorsteuerungseinheit 9 zugeführt.

## Patentansprüche

1. Verfahren zum Betrieb eines Stellantriebs mit einem elektrisch kommutierten Motor (1) zur Verstellung eines Stellorgans, mit einem Stellungsgeber (6) zur Erfassung der Drehwinkelposition des Rotors des Motors (1) oder eines von diesem drehbar antreibbaren Elements, mit einer Motorsteuerungseinheit (9) zur Kommutierung des Motors (1) und Lageregelung des Stellorgans, wobei der Motorsteuerungseinheit (9) Positionssignale zuführbar sind, die den vom Stellungsgeber (6) erfassten Positionswerten entsprechen, **dadurch gekennzeichnet, dass** nach Inbetriebnahme des Stellantriebs, bei der im Schrittomotorbetrieb zumindest eine vorherbestimmte Position angefahren wird, über mindestens eine volle Umdrehung des Rotors oder des drehbar antreibbaren Elements von dem Stellungsgeber (6) unkompensierte Messwerte erfasst werden, wobei in einer Signalverarbeitungseinheit (8) die Signale eines Sensors (7) in Sinusspannungssignale (Usinα') und Cosinusspannungssignale (Ucosα') verarbeitet werden und in der Motorsteuerungseinheit (9) durch einen A/D-Wandler (10) in digitale Sinus-Winkelsignale und Cosinus-Winkelsignale umgewandelt werden und in einer Kompensationseinheit (11) entsprechende Korrekturwerte zur Kompensation von Winkelfehlern gebildet werden, indem die Extremwerte der Sinus-Winkelsignale und Cosinus-Winkelsignale in der Kompensationseinheit (11) ermittelt werden und daraus Offsetkorrekturwerte und Amplitudenkorrekturwerte berechnet werden, sowie entsprechend trigonometrischen Berechnungen kompensierte Winkelsignale gebildet werden und die Korrekturwerte einer flüchtigen oder nichtflüchtigen Speichereinheit (14) zur Speicherung zugeleitet werden, und dass die im weiteren Betrieb erfassten Positionswerte mit den Korrekturwerten fehlerkompensiert und einer Kommutierungseinheit (12) und/oder einer Lageregelungseinheit (13) der Motorsteuerungseinheit (9) zugeleitet werden.

2. Verfahren nach Anspruch 1, **dadurch gekennzeichnet, dass** durch die Kompensationseinheit (11) die Winkelabweichung zwischen einer Nullposition des Rotors des Motors (1) oder des drehbar antreibbaren Elements und einer Nullposition des Stellungsgebers ermittelt und der Kommutierungseinheit (12) und/oder der Lageregelungseinheit (13) zugeleitet wird.

3. Verfahren nach Anspruch 2, **dadurch gekennzeichnet, dass** die Nullposition des Rotors oder des drehbar antreibbaren Elements eine vorherbestimmte angesteuerte elektrisch erzwungene Position des Motors (1) und die Nullposition des Stellungsgebers (6) durch die Einbaulage bestimmt ist.

4. Verfahren nach Anspruch 3, **dadurch gekennzeichnet, dass** ein Mittelwert der Winkelabweichungen zwischen mehreren vorherbestimmten angesteuerten elektrisch erzwungenen Positionen des Rotors oder des drehbar antreibbaren Elements und Messwerten des Stellungsgebers an den elektrisch erzwungenen Positionen gebildet und der Kommutierungseinheit (12) zur Korrektur der Kommutierung zugeleitet wird.

5. Verfahren nach einem der vorhergehenden Ansprüche, **dadurch gekennzeichnet, dass** nach einer Kompensation der Positionsmesswerte ein Hebelanschluss (5) oder das Stellorgan durch den Motor (1) in eine Referenzlage gefahren wird und die danach erfasste kompensierte Drehwinkelposition als Referenzposition der Speichereinheit (14) zur Indizierung für die Lageregelung der Lageregelungseinheit (13) zugeleitet wird.

6. Verfahren nach Anspruch 5, **dadurch gekennzeichnet, dass** die Referenzlage durch einen mechanischen Anschlag definiert ist, in die der Hebelanschluss (5) oder das Stellorgan gefahren wird.

7. Verfahren nach einem der vorhergehenden Ansprüche, **dadurch gekennzeichnet, dass** das drehbar antreibbare Element ein Rad eines dem Motor nachgeschalteten Getriebes ist.

8. Verfahren nach einem der vorhergehenden Ansprüche, **dadurch gekennzeichnet, dass** eine Initialisierungsphase nach einer Kompensierung bei einem Erstbetrieb des Stellantriebs erfolgt.

9. Verfahren nach einem der vorhergehenden Ansprüche, **dadurch gekennzeichnet, dass** eine Initialisierungsphase nach einer Kompensierung bei jeder Inbetriebnahme des Stellantriebs erfolgt.

10. Verfahren nach einem der vorhergehenden Ansprüche, **dadurch gekennzeichnet, dass** eine erweiterte oder dynamische Kompensierung abhängig von einer oder mehreren erfassten physikalischen Größen erfolgt.

11. Verfahren nach Anspruch 10, **dadurch gekennzeichnet, dass** die physikalische Größe eine oder mehrere bestimmte Temperaturen insbesondere Betriebstemperaturen des Stellantriebs sind.

12. Stellantrieb mit einem elektrisch kommutierten Motor (1) zur Verstellung eines Stellorgans, mit einem Stellungsgeber (6) zur Erfassung der Drehwinkelposition des Rotors des Motors (1) oder eines von diesem drehbar antreibbaren Elements, mit einer Motorsteuerungseinheit (9) zur Kommutierung des Motors (1) und Lageregelung des Stellorgans, wobei der Motorsteuerungseinheit (9) Positionssignale zuführbar sind, die den vom Stellungsgeber (6) erfassten Positionswerten entsprechen, **dadurch gekennzeichnet, dass** nach Inbetriebnahme des Stellantriebs, bei der im Schrittmotorbetrieb zumindest eine vorherbestimmte Position angefahren wird, über mindestens eine volle Umdrehung des Rotors oder des drehbar antreibbaren Elements von dem Stellungsgeber (6) unkompensierte Messwerte erfasst werden, wobei in einer Signalverarbeitungseinheit 8 die Signale eines Sensors 7 in Sinusspannungssignale (Usinα') und Cosinusspannungssignale (Ucosα') verarbeitet werden und in der Motorsteuerungseinheit (9) durch einen A/D-Wandler (10) in digitale Sinus-Winkelsignale und Cosinus-Winkelsignale umgewandelt werden und in einer Kompensationseinheit (11) entsprechende Korrekturwerte zur Kompensation von Winkelfehlern gebildet werden, indem die Extremwerte der Sinus-Winkelsignale und Cosinus-Winkelsignale in der Kompensationseinheit (11) ermittelt werden und daraus Offsetkorrekturwerte und Amplitudenkorrekturwerte berechnet werden, sowie entsprechend trigonometrischen Berechnungen kompensierte Winkelsignale gebildet werden und die Korrekturwerte einer flüchtigen oder nichtflüchtigen Speichreineit (14) zur Speicherung zugeleitet werden, und dass die im weiteren Betrieb erfassten Positionswerte mit den Korrekturwerten fehlerkompensiert und einer Kommutierungseinheit (12) und/oder einer Lageregelungseinheit (13) der Motorsteuerungseinheit (9) zugeleitet werden.

13. Stellantrieb nach Anspruch 12, **dadurch gekennzeichnet, dass** der Stellungsgeber (6) einen magnetoresistiven Winkelsensor, einen Hallsensor (7) oder einen induktiven Sensor aufweist, durch den das Magnetfeld des oder der Rotormagnete des Motors oder eines auf der Motorwelle (2) oder dem von dem Motor antreibbaren Element angeordneten Magneten (3) erfassbar ist.

14. Stellantrieb nach einem der Ansprüche 12 und 13, **dadurch gekennzeichnet, dass** das von dem Motor drehbar antreibbare Element ein Zwischenrad zwischen der Motorwelle und dem Stellorgan ist.

15. Stellantrieb nach einem der Ansprüche 12 bis 14, **dadurch gekennzeichnet, dass** das Stellorgan (5) ein Stellorgan eines Kraftfahrzeugs ist.

16. Stellantrieb nach Anspruch 15, **dadurch gekennzeichnet, dass** das durch Stellorgan die Schaufelgeometrie eines Turboladers verstellbar ist.

17. Stellantrieb nach Anspruch 15, **dadurch gekennzeichnet, dass** durch das Stellorgan Ladungsbewegungsklappen verstellbar sind.

18. Stellantrieb nach Anspruch 15, **dadurch gekennzeichnet, dass** durch das Stellorgan ein variabel verstellbarer Ventiltrieb verstellbar ist.

19. Stellantrieb nach Anspruch 15, **dadurch gekennzeichnet, dass** durch das Stellorgan eine Getriebeschaltung verstellbar ist.

20. Stellantrieb nach Anspruch 15, **dadurch gekennzeichnet, dass** durch das Stellorgan (5) eine Drosselklappe verstellbar ist.

21. Stellantrieb nach Anspruch 15, **dadurch gekennzeichnet, dass** durch das Stellorgan eine Abgasregelklappe verstellbar ist.

22. Stellantrieb nach Anspruch 15, **dadurch gekennzeichnet, dass** durch das Stellorgan ein Abgas-Bypassventil verstellbar ist.

## Claims

1. Method for operating an actuating drive having an electrically commutated motor (1) for adjusting an actuating member, having a position sensor (6) for detecting the rotary angle position of the rotor of the motor (1) or of an element which can be driven in a rotatable manner by said motor, having a motor control unit (9) for commutating the motor (1) and regulating the position of the actuating member, it being possible to supply position signals, which correspond to the position values detected by the position sensor (6), to the motor control unit (9), **characterized in that**, after the actuating drive is started, in which process at least one predetermined position is approached during stepper motor operation, uncompensated measured values are detected by the position sensor (6) over at least one full revolution of the rotor or of the element which can be driven in a rotatable manner, the signals of a sensor (7) being processed into sine voltage signals (Usinα') and cosine voltage signals (Ucosα') in a signal processing unit (8) and being converted into digital sine angle signals and cosine angle signals in the motor control unit (9) by an A/D converter (10) and corresponding correction values for compensating angle errors being formed in a compensation unit (11) by the extreme values of the sine angle signals and cosine angle signals being determined in the compensation unit (11), and offset correction values and amplitude correction values being calculated from said extreme values, and angle signals which are compensated in accordance with trigonometric calculations being formed and the correction values being fed to a volatile or non-volatile memory unit (14) for storage purposes, and **in that** the errors in the position values, which are detected during further operation, are compensated with the correction values and are fed to a commutation unit (12) and/or to a position regulation unit (13) of the motor control unit (9).

2. Method according to Claim 1, **characterized in that** the angular deviation between a zero position of the rotor of the motor (1) or of the element which can be driven in a rotatable manner and of a zero position of the position sensor is determined by the compensation unit (11) and fed to the commutation unit (12) and/or to the position regulation unit (13).

3. Method according to Claim 2, **characterized in that** the zero position of the rotor or of the element which can be driven in a rotatable manner is a predetermined actuated electrically enforced position of the motor (1) and the zero position of the position sensor (6) is determined by the installation position.

4. Method according to Claim 3, **characterized in that** an average value of the angular deviations between a plurality of predetermined actuated electrically enforced positions of the rotor or of the element which can be driven in a rotatable manner and measured values of the position sensor at the electrically enforced positions is formed and fed to the commutation unit (12) in order to correct the commutation.

5. Method according to one of the preceding claims, **characterized in that**, after compensation of the measured position values, a lever connection (5) or the actuating member is moved to a reference position by the motor (1), and the compensated rotary angle position detected thereafter is fed to the memory unit (14) as a reference position in order to provide an indication for position regulation of the position regulation unit (13).

6. Method according to Claim 5, **characterized in that** the reference position is defined by a mechanical stop, into which reference position the lever connection (5) or the actuating member is moved.

7. Method according to one of the preceding claims, **characterized in that** the element which can be driven in a rotatable manner is a gear of a gear mechanism which is connected downstream of the motor.

8. Method according to one of the preceding claims, **characterized in that** an initialization phase is performed after compensation when the actuating drive is first operated.

9. Method according to one of the preceding claims, **characterized in that** an initialization phase is performed after compensation each time the actuating drive is started.

10. Method according to one of the preceding claims, **characterized in that** extended or dynamic compensation is performed as a function of one or more detected physical variables.

11. Method according to Claim 10, **characterized in that** the physical variables are one or more determined temperatures, in particular operating temperatures of the actuating drive.

12. Actuating drive having an electrically commutated motor (1) for adjusting an actuating member, having a position sensor (6) for detecting the rotary angle position of the rotor of the motor (1) or of an element which can be driven in a rotatable manner by said motor, having a motor control unit (9) for commutating the motor (1) and regulating the position of the actuating member, it being possible to supply position signals, which correspond to the position values detected by the position sensor (6), to the motor control unit (9), **characterized in that**, after the actuating drive is started, in which process at least one predetermined position is approached during stepper motor operation, uncompensated measured values are detected by the position sensor (6) over at least one full revolution of the rotor or of the element which can be driven in a rotatable manner, the signals of a sensor (7) being processed into sine voltage signals (Usinα') and cosine voltage signals (Ucosα') in a signal processing unit (8) and being converted into digital sine angle signals and cosine angle signals in the motor control unit (9) by an A/D converter (10) and corresponding correction values for compensating angle errors being formed in a compensation unit (11) by the extreme values of the sine angle signals and cosine angle signals being determined in the compensation unit (11), and offset correction values and amplitude correction values being calculated from said extreme values, and angle signals which are compensated in accordance with trigonometric calculations being formed and the correction values being fed to a volatile or non-volatile memory unit (14) for storage purposes, and **in that** the errors in the position values, which are detected during further operation, are compensated with the correction values and are fed to a commutation unit (12) and/or to a position regulation unit (13) of the motor control unit (9).

13. Actuating drive according to Claim 12, **characterized in that** the position sensor (6) has a magnetoresistive angle sensor, a Hall sensor (7) or an inductive sensor by means of which the magnetic field of the rotor magnet or magnets of the motor or of a magnet (3) which is arranged on the motor shaft (2) or on the element which can be driven by the motor can be detected.

14. Actuating drive according to either of Claims 12 and 13, **characterized in that** the element which can be driven in a rotatable manner by the motor is an intermediate gear between the motor shaft and the actuating member.

15. Actuating drive according to one of Claims 12 to 14, **characterized in that** the actuating member (5) is an actuating member of a motor vehicle.

16. Actuating drive according to Claim 15, **characterized in that** the blade geometry of a turbocharger can be adjusted by the actuating member.

17. Actuating drive according to Claim 15, **characterized in that** charge motion valves can be adjusted by the actuating member.

18. Actuating drive according to Claim 15, **characterized in that** a variably adjustable valve drive can be adjusted by the actuating member.

19. Actuating drive according to Claim 15, **characterized in that** a gear mechanism shifting means can be adjusted by the actuating member.

20. Actuating drive according to Claim 15, **characterized in that** a throttle valve can be adjusted by the actuating member (5).

21. Actuating drive according to Claim 15, **characterized in that** an exhaust gas control valve can be adjusted by the actuating member.

22. Actuating drive according to Claim 15, **characterized in that** an exhaust gas bypass valve can be adjusted by the actuating member.

## Revendications

1. Procédé pour faire fonctionner un actionneur ayant un moteur (1) à commutation électrique pour le déplacement d'un organe de réglage, comprenant un indicateur (6) de position pour la détection de la position angulaire en rotation du rotor du moteur (1) ou d'un élément pouvant être entraîné en rotation par celui-ci, comprenant une unité (9) de commande du moteur pour la commutation du moteur et la régulation de la position de l'organe de réglage, des signaux de position, qui correspondent au valeurs de position détectées par l'indicateur (6) de position, pouvant être envoyés à l'unité (9) de commande du moteur, **caractérisé en ce qu'**après la mise en marche de l'actionneur, en partant d'au moins une position déterminée auparavant pour le fonctionnement du moteur pas-à-pas, on détecte des valeurs de mesure non compensées par l'indicateur (6) de position sur au moins un tour complet du rotor ou de l'élément pouvant être entraîné en rotation, dans lequel on transforme dans une unité (8) de traitement du signal les signaux d'un capteur (7) en signaux (Usinα') de tension sinus et en signaux (Ucosα') de tension cosinus et dans l'unité (9) de commande du moteur, on les transforme par un convertisseur (10) A/N en des signaux angulaires sinus numériques et en des signaux angulaires cosinus numériques et, dans une unité (11) de compensation, on forme des valeurs correspondantes de correction pour la compensation d'erreurs angulaires, en déterminant les valeurs extrêmes des signaux angulaires sinus et des signaux angulaires cosinus dans l'unité (11) de compensation et on en calcule des valeurs de correction de décalage et des valeurs de correction d'amplitude, ainsi que l'on forme des signaux angulaires compensés conformément à des calculs trigonométriques et on envoie les valeurs de correction à une unité (14) de mémoire rémanente ou non rémanente pour la mémorisation, et **en ce que** l'on compense, par les valeurs de correction, les erreurs sur les valeurs de position détectées dans le fonctionnement ultérieur et on les envoie à une unité (12) de commutation et/ou à une unité (13) de régulation de position de l'unité (9) de commande du moteur.

2. Procédé suivant la revendication 1, **caractérisé en ce que**, par l'unité (11) de compensation, on détermine l'écart angulaire entre une position de zéro du rotor du moteur (1) ou de l'élément pouvant être entraîné en rotation et une position de zéro de l'indicateur de position et on l'envoie à l'unité (12) de commutation et/ou à l'unité (13) de régulation de la position.

3. Procédé suivant la revendication 2, **caractérisé en ce que** la position de zéro du rotor ou de l'élément pouvant être entraîné en rotation est déterminée par une position forcée électriquement, commandée et déterminée au préalable du moteur (1) et la position de zéro de l'indicateur (6) de position est déterminée par la position de montage.

4. Procédé suivant la revendication 3, **caractérisé en ce qu'**on forme une valeur moyenne des écarts angulaires entre plusieurs positions forcées électriquement, commandées et déterminées au préalable du rotor ou de l'élément pouvant être entraîné en rotation et des valeurs de mesure de l'indicateur de position sur les positions forcées électriquement et on les envoie à l'unité (12) de commutation pour la correction de la commutation.

5. Procédé suivant l'une des revendications précédentes, **caractérisé en ce qu'**après une compensation des valeurs de mesure de position, on met, par le moteur (1), dans une position de référence, une connexion (5) à levier ou l'organe de réglage et on envoie la position angulaire en rotation compensée et détectée comme position de référence à l'unité (14) de mémoire pour l'indexation en vue de la régulation de position de l'unité (13) de régulation de la position.

6. Procédé suivant la revendication 5, **caractérisé en ce qu'**on définit la position de référence par une butée mécanique, dans laquelle vient la connexion (5) à levier ou l'organe de réglage.

7. Procédé suivant l'une des revendications précédentes, **caractérisé en ce que** l'élément pouvant être entraîné en rotation est une roue d'une transmission montée en aval du moteur.

8. Procédé suivant l'une des revendications précédentes, **caractérisé en ce qu'**une phase d'initialisation est effectuée après une compensation lors de la première mise en marche de l'actionneur.

9. Procédé suivant l'une des revendications précédentes, **caractérisé en ce qu'**une phase d'initialisation est effectuée après une compensation à chaque mise en marche de l'actionneur.

10. Procédé suivant l'une des revendications précédentes, **caractérisé en ce qu'**une compensation élargie ou dynamique est effectuée en fonction d'une ou de plusieurs grandeurs physiques détectées.

11. Procédé suivant la revendication 10, **caractérisé en ce que** les grandeurs physiques sont une ou plusieurs températures définies, notamment des températures de fonctionnement de l'actionneur.

12. Actionneur comprenant un moteur (1) à commutation électrique pour le déplacement d'un organe de réglage, comprenant un indicateur (6) de position pour la détection de la position angulaire en rotation du rotor du moteur (1) ou d'un élément pouvant être entraîné en rotation par celui-ci, comprenant une unité (9) de commande du moteur pour la commutation du moteur (1) et la régulation de la position de l'organe de réglage, dans lequel il peut être envoyé à l'unité (9) de commande du moteur des signaux de position, qui correspondent aux valeurs de position détectées par l'indicateur (6) de position, **caractérisé en ce que**, après la mise en marche de l'actionneur, dans laquelle, dans le fonctionnement du moteur pas-à-pas, on débute par au moins une position déterminée à l'avance, il est détecté, pour au moins une rotation complète du rotor ou de l'élément pouvant être entraîné en rotation, par l'indicateur (6) de position des valeurs de mesure non compensées, dans lequel dans une unité (8) de traitement du signal, les signaux d'un capteur (7) sont transformés en signaux (Usinα') de tension sinus et en signaux (Ucosα') de tension cosinus et, dans l'unité (9) de commande du moteur, on les transforme par un convertisseur (10) A/N en des signaux angulaires sinus numériques et en des signaux angulaires cosinus numériques et, dans une unité (11) de compensation, on forme des valeurs correspondantes de correction pour la compensation d'erreurs angulaires, en déterminant, dans l'unité (11) de compensation, les valeurs extrêmes des signaux angulaires sinus et des signaux angulaires cosinus et on en calcule des valeurs de correction de décalage et des valeurs de correction d'amplitude, ainsi que l'on forme des signaux angulaires compensés conformément à des calculs trigonométriques et on envoie les valeurs de correction à une unité (14) de mémoire rémanente ou non rémanente pour la mémorisation et **en ce que** l'on compense, par les valeurs de correction, les erreurs sur les valeurs de position détectées dans le fonctionnement ultérieur et on les envoie à une unité (12) de commutation et/ou à une unité (13) de régulation de position de l'unité (9) de commande du moteur.

13. Actionneur suivant la revendication 12, **caractérisé en ce que** l'indicateur (6) de position comporte un capteur d'angle magnétorésistif, un capteur (7) de Hall ou un capteur inductif, par lequel le champ magnétique du ou des aimants rotoriques du moteur ou d'un aimant (3) monté sur l'arbre (2) du moteur ou sur l'élément pouvant être entraîné par le moteur peut être détecté.

14. Actionneur suivant l'une des revendications 12 et 13, **caractérisé en ce que** l'élément pouvant être entraîné en rotation par le moteur est une roue intermédiaire entre l'arbre du moteur et l'organe de réglage.

15. Actionneur suivant l'une des revendications 12 et 14, **caractérisé en ce que** l'organe (5) de réglage est un organe de réglage d'un véhicule automobile.

16. Actionneur suivant la revendication 15, **caractérisé en ce que** la géométrie des aubes d'un turbocompresseur peut être réglé par l'organe de réglage.

17. Actionneur suivant la revendication 15, **caractérisé en ce que** des volets de déplacement de charge peuvent être réglés par l'organe de réglage.

18. Actionneur suivant la revendication 15, **caractérisé en ce qu'**un actionneur de robinet, réglable de manière variable, peut être réglé par l'organe de réglage.

19. Actionneur suivant la revendication 15, **caractérisé en ce qu'**un circuit de transmission peut être réglé par l'organe de réglage.

20. Actionneur suivant la revendication 15, **caractérisé en ce qu'**une vanne papillon peut être réglée par l'organe (5) de réglage.

21. Actionneur suivant la revendication 15, **caractérisé en ce qu'**un volet de régulation des gaz d'échappement peut être réglé par l'organe de réglage.

22. Actionneur suivant la revendication 15, **caractérisé en ce qu'**une vanne de dérivation des gaz d'échappement peut être réglée par l'organe de réglage.
